# EUROPEAN PATENT APPLICATION

(11) **EP 1 753 163 A1**
(43) Date of publication of application: **14.02.2007**
(21) Application number: 05017323.6
(22) Date of filing: 09.08.2005
(51) Int. Cl.: H04J 3/16

(54) **Method and network element for transmission of data with virtual containers**

(71) Applicant: SIEMENS AKTIENGESELLSCHAFT, 80333 München (DE)
(72) Inventor: De Prezzo, Stefano, 67100 L'Aquila (IT); Saracino, Sante, 02015 Città Ducale (IT)

(57) **Abstract**

The transmission of data from a first network element to a second network element of a network, comprising network elements, is done by the following steps:
set up at least one path of first virtual containers from the first network element through the network to the second network element,
set up a link capacity adjustment scheme or LCAS group with a group identifier, using said first virtual containers,
using said LCAS group for transmission of data from the first network element to the second network element,
inserting the group identifier in the overhead of at least one virtual container of second virtual containers in the first network element,
sending the virtual container with the group identifier to a network element of said network,
checking the overhead and detection of the group identifier in conjunction with an information about the second virtual containers in said network element,
adding these second virtual containers to the corresponding LCAS group.

## Description

The invention concerns a method for transmission of data according to the preamble of claim 1 and a network element.

The transmission of data, e.g. data of a customer or client, is done by a network, e.g. a synchronous network, which belongs often to a provider. A realisation for such a network is a synchronous digital hierarchy network, abbreviated SDH-network, a synchronous optical network, abbreviated SONET, or an optical transport networks, abbreviated OTN.

For transmission of data e.g. a customer requests from a provider a path or link from a first network element or device through the network to a second network element or device. Very often, the customer has access or control to said first and/or second network element, at least to an interface of said network elements. Further on, the path is requested with a certain bandwidth.

If a provider receives such a request, he configures or set up a path from the first network element to the second network element with the bandwidth in the network. This request is normally managed manually by an operator who uses a management system, like a transmission/network management system or a network manager respectively, which can be either concentrated or distributed, like in automatically switched optical or transport networks, abbreviated ASON or ASTN, to setup the path with the bandwidth.

In synchronous networks the data is transmitted through transport modules, e.g. synchronous transport module STM1, STM4, STM16, STM64 or STM of higher order. These transport modules contain so called virtual containers, abbreviated VC, which comprise data and overhead. The overhead is used for transportation of control, management and other information. According to the SDH standard these Virtual Containers are defined in sizes like VC11, VC12, VC2, VC3 or VC4. The path and bandwidth in such networks are switched in terms of these virtual containers.

Further on, a number of virtual containers, shortened to VCs, can be grouped to form a virtual concatenated container, abbreviated by VCAT. Beyond this, concatenated VCs can be managed by the link capacity adjustment scheme, abbreviated LCAS, to be an LCAS group.

A path from a first network element to a second network element through the network is often configured for virtual containers, which belongs to an LCAS group.

The LCAS method and protocol provide a procedure for flexible changing the bandwidth of an LCAS group, by adding or removing one or more of VCs.

Changing the configuration of said LCAS group is often done in a manual fashion. If the customer needs a bandwidth variation on a path, which requires a change in the number of VCs forming a pre-existent LCAS-Group, he has to address a formal request to the operator of the network. This request will take a certain amount of time, which ranges from few days to some weeks, until the operator changes the bandwidth of the LCAS group / path by commands given to the management system of the network.

The development of a standard User Network Interfaces or UNI, like OIF UNI 1.0, defines a set of services, a signalling protocol and methods for information exchange between a customer and a provider. The primary service offered by such a UNI is the ability to create and delete connections on demand. However no implementation is available yet.

It is an object of the present invention to improve the possibilities for the transmission of data.

This object is achieved by the features of claim 1 or claim 12.

According to the invention, data will be transmitted from a first network element to a second network element of a network, comprising network elements. At least one path of first virtual containers from the first network element through the network to the second network element is set up. A link capacity adjustment scheme or LCAS group with a group identifier, using said first virtual containers, is set up. This LCAS group is used for transmission of data from the first network element to the second network element. For increasing the bandwidth of said LCAS group, the group identifier of said LCAS group is inserted in the overhead of at least one virtual container of second virtual containers, which are "new", unused, unassigned or "free" virtual containers, in the first network element. These free virtual container(s) with the group identifier are sent to a network element, belonging to the provider of said network. There the overhead of the virtual container is checked and the group identifier is detected in conjunction with an information about the used second virtual containers. Applying or using these determined information is done by adding these second virtual containers to the corresponding LCAS group. This has the advantage that an easy and simple possibility is given to the customer for increasing the bandwidth of a LCAS group.

Further developments of the invention are identified in sub claims.

The applying or using of the determined information can be done by sending a message containing the information of the second virtual containers and the group identifier to a management system of said network. There a path from the first network element to the second network element for the second virtual containers is set up. The second virtual containers can then be added to the corresponding LCAS group, in order to increase the bandwidth of said LCAS group up to the second network element.

Further on after set up of a path for the second virtual containers, a first message, containing the group identifier, can be sent from the management system to the first network element. There said message is evaluated and the second virtual containers will be added to said LCAS group. Additionally information about the second virtual container can be transferred with the group identifier via said message. This has the advantage that the addition of the LCAS group is done through a command form the management system in the network element.

Beyond after set up of a path for the second virtual containers, a second message containing a second group identifier is send sent from the management system to the second network element. There this message is evaluated and the second virtual containers are added to the LCAS group with the second group identifier. Additionally information about the second virtual containers and the second group identifier can be contained in the message.

In case of unavailable resources for adding the second virtual containers to a LCAS group a first denial information is inserted in an overhead area of at least one virtual container of the second virtual containers, which will be sent to the first network element. This has the advantage that information about the unavailability of the request is sent back to the customer, so he gets feedback.

Also second denial information can be inserted in an overhead area of at least one virtual container of second virtual containers, which will be sent to the second network element.

In order to insert the group identifier in a virtual container the H4 or K4 byte of the overhead can be used, according to definitions of the synchronous digital hierarchy or synchronous optical network standard. The same bytes can be used for inserting the denial information.

The management system can be either distributed or concentrated. A distributed management system can be employed by using control components of an automatically switched optical or transport network (ASON / ASTN). A concentrated management system can be employed by using a telecommunication network management system.

An exemplary embodiment of the invention is described in greater detail below with reference to a drawing.

Shown in the drawings are:
Figure 1 schematic of a network,
Figure 2 a first frame,
Figure 3 a second frame.

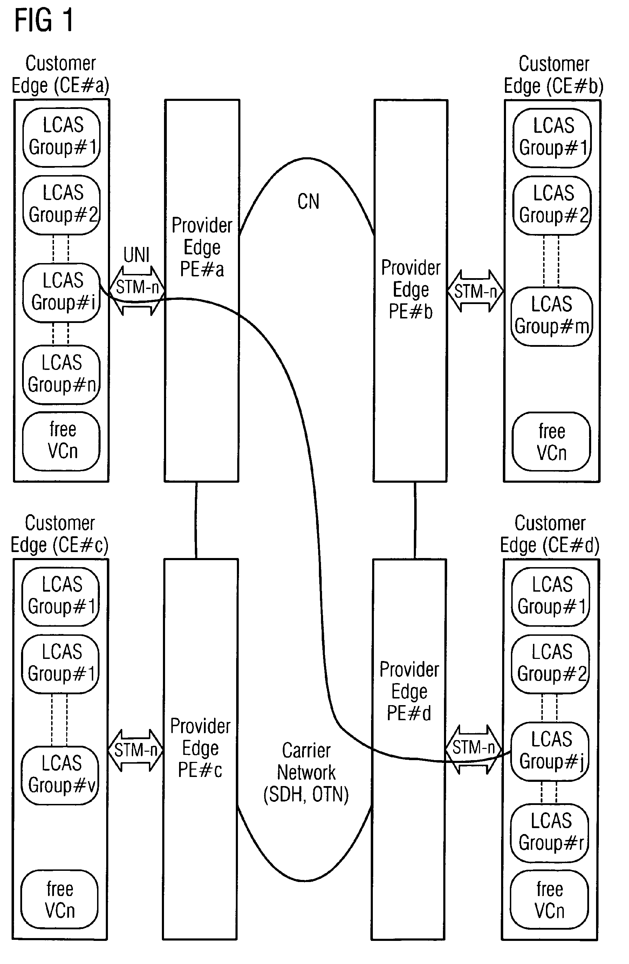

Figure 1 shows a schematic / diagram of a network CN. This can be a carrier network like a synchronous digital hierarchy network (SDH) or synchronous optical network (SONET) or optical transport network (OTN) comprising four provider edges PE#a,...,PE#d. These provider edges PE#a,...,PE#d comprising at least one synchronous transport module interface STM-n, which is an interface to a customer edge CE#a,...,CE#d. According to figure 1 provider edge PE#a is connected to customer edge CE#a, provider edge PE#b is connected to customer edge CE#b, PE#c to CE#c, PE#d to CE#d. Each customer edge CE#a, ..., CE#d comprises at least one link capacity adjustment scheme group or LCAS group. In example customer CE#a comprises LCAS group #1 till LCAS group #n, customer edge CE#b LCAS group #1 till LCAS Group #m, customer edge CE#c LCAS Group #1 till #v, customer edge CE#d LCAS Group 1 till #r. Further on every customer edge has at least one free, unused or unassigned virtual container VCn.
Beyond from customer edge CE#a LCAS Group #i a path via provider edge PE#a through the network CN and provider edge PE#d to customer edge CE#d LCAS Group #j is switched, which is marked through a line in figure 1. Through this path a customer can communicate among these different sides.

In order to simplify the example, it is assumed that the maximum number of LCAS Groups managed in each customer edge or network element is sixteen. This number can be easily increased as explained later. So, each LCAS Group will be identified by a number from 0 to 15 at each customer edge. In the following example the LCAS group identifier has a local meaning; in example the LCAS group identifier #i, which can be 0x05, at customer edge CE#a is different from the LCAS Group identifier #j, which can be 0x06, at customer edge CE#d, even the two LCAS Groups are connected each other. In this case a conversion table exists in every provider edge PE#i for converting the far-end LCAS group identifier, contained in the overhead of the VCs received from the network CN, in the correspondent near-end LCAS group identifier used by the local customer edge CE. Although it is possible that the same LCAS group identifier is used at both ends. Also unique LCAS group identifiers can be used on the whole network. The invention is not limited on the kind of the used LCAS group identifier.

This LCAS group identifier is generated by creation of an LCAS group and allows the customer and provider to correctly identify the LCAS Group at each end. This LCAS group identifier will be used to increase or decrease the bandwidth of a LCAS group.

A path of first virtual containers from the first network element or customer edge CE#a through the network CN to the second network element or customer edge CE#d is set up. A link capacity adjustment scheme or LCAS group with a group identifier, using said first virtual containers, is set up. E.g. different LCAS group identifier will be used at each end. On customer edge CE#a LCAS group identifier #i or LCAS group #i and on customer edge CE#d LCAS group identifier #j or LCAS group #j will be used.
This LCAS group or LCAS group path is used for transmission of data from the first network element / customer edge CE#a to the second network element / customer edge CE#d.
For increasing the bandwidth of said LCAS group, the group identifier is inserted in the overhead of at least one or each "new", unused, unassigned or "free" virtual container of second virtual containers which are in the first network element and are going to be added to the LCAS group in order to increase the overall bandwidth. E.g. in the first network element / customer edge CE#a the group identifier #i is inserted in the overhead of at least one free virtual container.
The group identifier can be inserted in the H4 or K4[2] byte of the overhead.

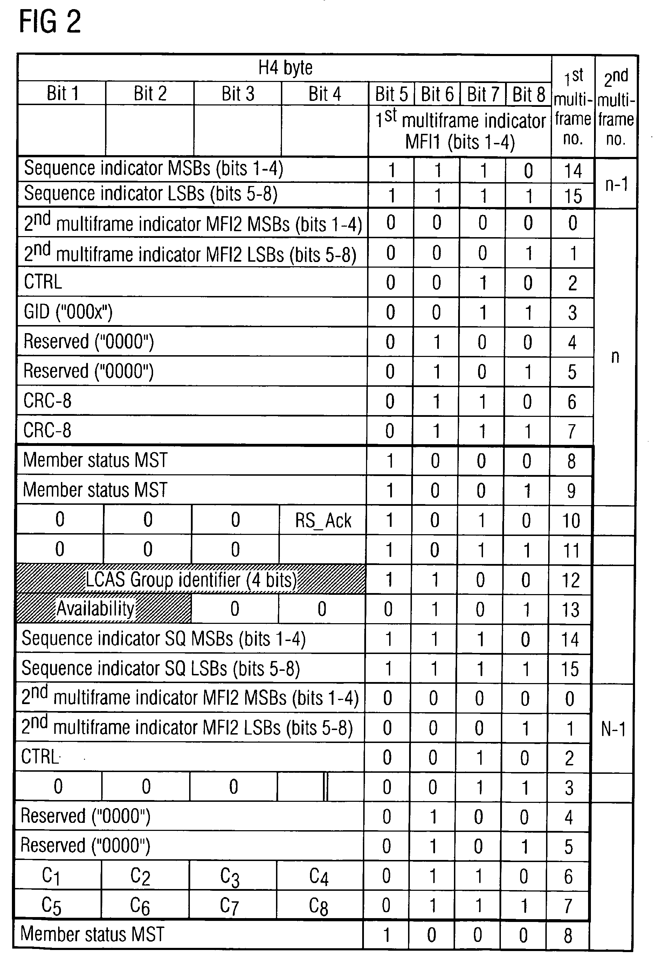

Figure 2 shows an example, at which position of the H4 Byte the group identifier can be inserted. According to figure 2 the LCAS group identifier is inserted in Bit 1 till Bit 4 of the 12^{th} multi-frame. This position can be used in case virtual container VC3 or VC4 is/are used.

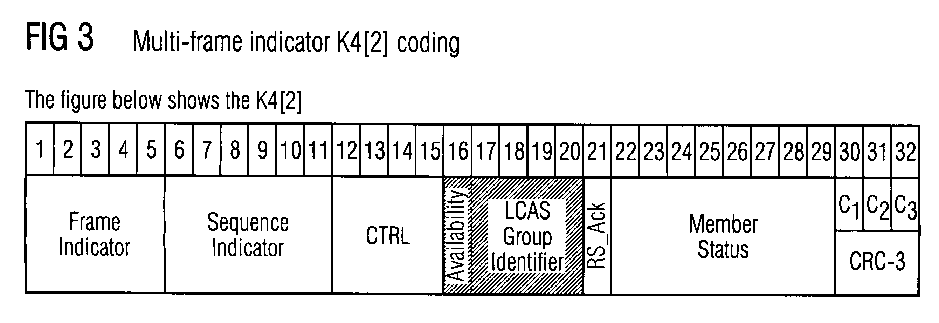

Figure 3 shows an example, at which position of the K4[2] Byte the group identifier can be inserted. According to figure 3 the LCAS group identifier is inserted in Bit 17 till Bit 20 of the K4[2] Byte. This position can be used in case virtual container VC12 is/are used.

This or these free virtual container(s) with the group identifier are sent to a network element, belonging to the provider, of said network, e.g. to the provider edge PE#a. There the overhead of the virtual container is checked, evaluated or "sniffed" and the group identifier, e.g. #i, is detected in conjunction with an information about the used second virtual container(s). So information about which virtual container is to be added to which LCAS group is given. For adding the virtual container to said LCAS group a path has to be set up, which is done by a management system or with components of an automatic switched optical or transport network. Set up of a path for virtual containers / set up of cross connections for that path is known by a person skilled in the art.
In an embodiment of the invention a message containing the information of the second virtual containers and the group identifier is sent, e.g. from the provider edge, to a management system of said network. There a path from the first network element to the second network element for the second virtual containers is set up. The second virtual containers can then be added to the corresponding LCAS group, in order to increase the bandwidth of said LCAS group.
Further on after set up of a path for the second virtual containers, a first message, containing the group identifier, e.g. group identifier #i, can be sent from the management system to the first network element / customer edge CE#a. There said message is evaluated and the second virtual containers will be added to said LCAS group in the first network element / customer edge CE#a. Additionally information about the second virtual container/s can be transferred with the group identifier via said message.
After or together with the set up of a path for the second virtual containers, a second message containing a second group identifier, e.g. group identifier #j, is sent from the management system, through the appropriate overhead, to the second network element / customer edge CE#d. There this message is evaluated and the second virtual containers are added to the LCAS group with the second group identifier, e.g. group identifier #j. Additional information about the second virtual containers and the second group identifier can be contained in the message.

In case of unavailable resources for adding the second virtual containers to the LCAS group or unavailable resources for a path of the second virtual containers a first denial information is inserted in an overhead area of at least one virtual container of the second virtual containers, which will be sent to the first network element. Also a second denial information can be inserted in an overhead area of at least one virtual container of second virtual containers, which will be sent to the second network element.

In order to insert the denial information in a virtual container the H4 or K4 byte of the overhead can be used, according to definitions of the synchronous digital hierarchy or synchronous optical network standard.
Figure 2 shows an example; where in the H4 Byte the denial information is inserted. According to figure 2 the denial information is inserted in Bit 1 and Bit 2 of the 13^{th} multi-frame. This position can be used in case one or more virtual container VC3 or VC4 is used.
Figure 3 shows an example, where in the K4[2] Byte the denial information can be inserted. According to figure 3 the denial information is inserted in Bit 16 of the K4[2] Byte. This position can be used in case a virtual container VC12 is used. In figure 2 and 3 the mentioned bit positions are marked with Availability. The Availability "field" is used to provide the customer with a feedback concerning his request. This information can be exchanged for each virtual container and it can have the following values:
- Idle (00) :
   no request has been done by the customer or the virtual container is already a LCAS member or the customer request has been done and the provider is trying to set-up the path;
- No resource available (01)
   the provider hasn't got the available resource to accomplish the customer request;
- Request denied by provider (10)
   the customer request has been denied by the provider;
- request denied by far-end CE (11)
   the far-end customer equipment has refused the request;

Also, once the "free" virtual container to be added has been chosen, the H4 or K4[2] of the chosen virtual container can contain the LCAS information as described in ITU-T G.7042 and the LCAS group identifier, e.g. LCAS group #i (customer edge CE#a).

Further on, once a cross connection for the free virtual container / second virtual container is set up, the far-end provider edge PE#d can intercept an LCAS control packet and insert the LCAS group identifier of the customer edge CE#d of the LCAS group, where the free virtual container has to be added to. E.g. at the provider edge PE#d LCAS group #j is inserted in the virtual container with LCAS control information.

The customer edge CE#d / the second network element "sniffs" the overhead / all the H4 / K4[2] coding coming from the provider edge PE#d and realizes which virtual container has to be added to the LCAS group #j. The customer edge CE#d accepts the request of increasing the bandwidth. Customer edge CE#d terminates the LCAS control packet and implements the LCAS procedure as described in ITU-T G.7042.

If no resources are available to set up the path or if the customer request is not allowed, the provider can send this information back by means of the availability field and no action is performed.

If needed, the number of bits for the LCAS group identifier and/or the denial information can be increased by means of the multi frame signalling, similar to the LCAS procedure for transmitting the member status information. If, for example, 8 bits are needed, the LCAS group identifier is split in two parts, the bits 1-4 are sent with the 2^{nd} multi-frame indicator number even; the remained bits are sent with the 2^{nd} multi-frame indicator number odd. With this mechanism the number of bits can be increased as much as allowed by the number of frames contained in a multi-frame.
This is valid also for the availability field. The information is split and put in two or more consecutive containers. The 2^{nd} multi-frame indicator number can be used two synchronize the bits. The synchronization method can be similar to the one used for member status exchange according to ITU-T G.7042 and ITU-T G.707.

The management system can be either distributed or concentrated. A distributed management system can be realized or employed by using control components of an automatically switched optical or transport network (ASON / ASTN). A concentrated management system can be employed by using a telecommunication network management system.

Similar steps can be done to decrease the bandwidth of an LCAS group. In this example the LCAS CTRL word has to be IDLE to decrease the bandwidth.

Recapitulating, steps for an exemplary embodiment are once again described.
1. At the startup a LCAS connection has been set up by a network management system with a defined number of VC (at least one VC, for example 5 VC could already be set up and they implement the connection between LCAS Group #i and LCAS Group #j).
2. Each VC carries the LCAS information on the overhead plus the LCAS group identifier which is the same one for each VC belonging to the same LCAS group. All VCs belonging to the same LCAS group carry the same LCAS group Identifier.
3. Provider edge PE#a "sniffs" the H4/K4 bytes of all VCs coming from CE#a at a specified user network interface UNI. Free VCs do not carry any LCAS information on H4/K4 bytes, they carry the Value 0 on the LCAS field (H4/K4).
4. Customer Edge CE#a wants to increase the bandwidth of LCAS Group #i, for instance from 5 VC to 6 VC. Therefore a free VC is chosen and the LCAS information plus LCAS Group Identifier "#i" is inserted in the H4/K4 byte (overhead). The LCAS information also include the LCAS CTRL word which can be either "IDLE" or "ADD".
5. Provider edge PE#a realizes that a free VC has started to transmit LCAS information and looks into the Identifier. Provider edge PE#a determines the following information: VC position in the SDH structure and LCAS Group identifier.
6. Provider Edge PE#a interprets the information that the VC should be added to the LCAS group. A cross-connection is set up for the VC inside the network. The method to set up the cross-connection is known to a person skilled in the art, e.g. by using the ASON technology.
7. After the setting up of the cross-connection, provider edge PE#d terminates the overhead, analyses the byte H4/K4 and identifies the LCAS Group identifier contained in byte H4/K4. Moreover the provider edge (PE#a), which is the other end of the path, is known by provider edge PE#d through the network management system or ASON technology and based on these information the near-end LCAS group identifier is determined and used for customer edge CE#d.
8. Customer edge CE#d realizes by reading the byte H4/K4 that one free VC is carrying LCAS information. Customer edge CE#d therefore identifies the LCAS Group identifier contained in byte H4/K4. The VC will be assigned to LCAS Group #j.
9. The exchange of LCAS information between LCAS Group #i and LCAS Group #j will take to the bandwidth variation as described in G 7042.

## Claims

1. Method for transmission of data from a first network element to a second network element of a network, comprising network elements,
set up at least one path of first virtual containers from the first network element through the network to the second network element,
set up a link capacity adjustment scheme or LCAS group with a group identifier, using said first virtual containers, using said LCAS group for transmission of data from the first network element to the second network element,
**characterised by**
inserting the group identifier in the overhead of at least one virtual container of second virtual containers in the first network element,
sending the virtual container with the group identifier to a network element of said network,
checking the overhead and detection of the group identifier in conjunction with an information about the second virtual containers in said network element,
adding these second virtual containers to the corresponding LCAS group.

2. Method as claimed in claim 1,
**characterised by**
sending a message containing the information of the second virtual containers and the group identifier to a management system of said network,
set up a path from the first network element to the second network element for the second virtual containers,
adding the second virtual containers to the corresponding LCAS group, in order to increase the bandwidth of said LCAS group.

3. Method as claimed in claim 2,
**characterised by**
after set up of a path for the second virtual containers sending a first message, containing the group identifier, from the management system to the first network element, evaluation of said message in the first network element and adding the second virtual containers to said LCAS group.

4. Method as claimed in claim 3,
**characterised by**
after set up of a path for the second virtual containers sending a second message from the management system to the second network element with a command, containing a second group identifier,
evaluation of said message in the second network element and adding the second virtual containers to said LCAS group.

5. Method as claimed in one of preceding claims,
**characterised by**
in case of unavailable resources for adding the second virtual containers to a LCAS group a first denial information is inserted in an overhead area of at least on virtual container of the second virtual containers, which will be sent to the first network element.

6. Method as claimed in claim 5,
**characterised by**
a second denial information is inserted in an overhead area of at least one virtual container of second virtual containers, which will be sent to the second network element.

7. Method as claimed in one of the preceding claims,
**characterised by**
using virtual container according to the synchronous digital hierarchy or synchronous optical network standard and
using the H4 or K4 Byte of the overhead of the virtual container for inserting the group identifier.

8. Method as claimed in one of claims 5 to 7,
**characterised by**
using virtual container according to the synchronous digital hierarchy or synchronous optical network standard and using the H4 or K4 Byte of the overhead of the virtual container for inserting the denial information.

9. Method as claimed in one of the preceding claims,
**characterised by**
using a distributed or concentrated management system.

10. Method as claimed in claim 9,
**characterised by**
the distributed management system is realised by using control components of an automatically switched optical or transport network.

11. Method as claimed in claim 9,
**characterised by**
the concentrated management system is realised by using a telecommunication network management system.

12. Network Element comprising means for carrying out the method according to one of claims 1 to 11.
